# EUROPÄISCHE PATENTANMELDUNG

(11) **EP 2 996 286 A1**
(43) Veröffentlichungstag der Anmeldung: **16.03.2016**
(21) Anmeldenummer: 15185157.3
(22) Anmeldetag: 15.09.2015
(51) Int. Cl.: H04L 12/28

(54) **SYSTEM AUS EINEM ELEKTRISCHEN KÜCHENGERÄT UND EINEM ZUSATZMODUL**

(30) Priorität: 15.09.2014 DE 102014113273
(71) Anmelder: Vorwerk & Co. Interholding GmbH, 42275 Wuppertal (DE)
(72) Erfinder: Lang, Torsten, 42657 Solingen (DE); Greive, Volker, 69126 Heidelberg (DE)
(74) Vertreter: Müller, Enno

(57) **Zusammenfassung**

Die Erfindung betrifft ein System (1) aus einem elektrischen Küchengerät (2) und einem an das elektrische Küchengerät (2) zum Datenaustausch anschließbaren Zusatzmodul (3). Erfindungsgemäß ist vorgesehen, dass das Zusatzmodul (3) oder/und das elektrische Küchengerät (2) einen Funktransponder (6) aufweist und das elektrische Küchengerät (2) bzw. das Zusatzmodul (3) eine Funkleseeinrichtung (7) für eine Funkkommunikation mit dem Funktransponder (6) aufweist. Damit wird die Aufgabe gelöst, ein derartiges System (1) aus einem elektrischen Küchengerät (2) und einem an das elektrische Küchengerät (2) anschließbaren Zusatzmodul (3) anzugeben, bei dem eine Datenübertragung zwischen den beiden Komponenten des Systems (1) auf einfache und verlässliche Weise gewährleistet werden kann.

## Beschreibung

Die Erfindung betrifft ein System aus einem elektrischen Küchengerät und einem an das elektrische Küchengerät zum Datenaustausch anschließbaren Zusatzmodul.

Derartige elektrische Küchengeräte sind aus der Praxis z.B. in Form von universellen Küchenmaschinen bekannt, die neben einem mechanischen Verarbeiten von Nahrungsmitteln, z.B. mittels eines Rührwerks oder Schneidmessers, auch ein Garen der Nahrungsmittel ermöglichen. Zur Herstellung einer entsprechenden Speise sind häufig vorbestimmte Rezepte vorgesehen, die mehrere aufeinanderfolgende Rezeptschritte aufweisen. Um dem Benutzer eines derartigen elektrischen Küchengeräts das Herstellen einer Speise nach einem derartigen vorbestimmten Rezept zu ermöglichen, kann außerdem vorgesehen sein, Rezeptdaten zu den vorbestimmten Rezepten von außen her auf das elektrische Küchengerät zu übertragen.

Ausgehend davon ist es die Aufgabe der Erfindung, ein derartiges System aus einem elektrischen Küchengerät und einem an das elektrische Küchengerät anschließbaren Zusatzmodul anzugeben, bei dem eine Datenübertragung zwischen den beiden Komponenten des Systems auf einfache und verlässliche Weise gewährleistet werden kann.

Diese Aufgabe ist durch den Gegenstand des Patentanspruchs 1 gelöst. Bevorzugte Weiterbildungen der Erfindung finden sich in den Unteransprüchen.

Die Erfindung liegt insofern in einem System aus einem elektrischen Küchengerät und einem an das elektrische Küchengerät zum Datenaustausch anschließbaren Zusatzmodul, dadurch gekennzeichnet, dass das Zusatzmodul oder/und das elektrische Küchengerät einen Funktransponder aufweist und das elektrische Küchengerät bzw. das Zusatzmodul eine Funkleseeinrichtung für eine Funkkommunikation mit dem Funktransponder aufweist.

Es ist somit ein maßgeblicher Aspekt der Erfindung, dass zwischen den beiden Komponenten des erfindungsgemäßen Systems eine Funkkommunikation stattfinden kann. Die Erfindung erfordert somit, dass wenigstens eine Systemkomponente, also das elektrische Küchengerät oder das Zusatzmodul, einen Funktransponder aufweist und dass die andere Systemkomponente, also das Zusatzmodul oder das elektrische Küchengerät, mit der Funkleseeinrichtung versehen ist. Gemäß einer bevorzugten Weiterbildung der Erfindung ist jedoch vorgesehen, dass sowohl das elektrische Küchengerät als auch das daran anschließbare Zusatzmodul jeweils mit einem Funktransponder und mit einer Funkleseeinrichtung versehen sind.

Für die Erfindung sind verschiedene Funktechnologien einsetzbar. Gemäß einer bevorzugten Weiterbildung der Erfindung arbeiten der Funktransponder und die Funkleseeinrichtung jedoch auf Basis der RFID-Technologie oder auf Basis der NFC-Technologie. RFID (Radio Frequency Identification) und NFC (Near Field Communication) stellen bekannte Funkstandards dar, die zur Übertragung von Daten per Funk, insbesondere im Nahbereich, verlässlich eingesetzt werden können. Die Erfindung schlägt nun vor, diese Technologien erstmals für den Anschluss eines Zusatzmoduls an ein elektrisches Küchengerät zu verwenden.

Dabei sieht eine besonders bevorzugte Weiterbildung der Erfindung vor, dass der Funktransponder und die Funkleseeinrichtung derart ausgebildet und eingerichtet sind, dass die Funkkommunikation zwischen dem Funktransponder und der Funkleseeinrichtung automatisch aufgebaut wird, wenn der Abstand zwischen dem Funktransponder und der Funkleseeinrichtung einen vorbestimmten Abstand unterschritten hat. Diese bevorzugte Ausgestaltung der Erfindung gewährleistet damit einen automatischen Aufbau der Funkkommunikation zwischen dem elektrischen Küchengerät und dem Zusatzmodul, ohne dass der Benutzer des Systems dazu besondere Maßnahmen ergreifen muss. Sobald der vorbestimmte Abstand zwischen den beiden Systemkomponenten unterschritten wird, das Zusatzmodul also nahe genug an das elektrische Küchengerät herangebracht worden ist, so dass der vorbestimmte Abstand unterschritten wird, wird insofern ohne Zutun des Benutzers des Systems die Funkkommunikation zwischen den beiden Systemkomponenten initiiert.

Im Rahmen des automatischen Aufbaus der Funkkommunikation zwischen dem Funktransponder und der Funkleseeinrichtung können verschiedene Prozesse ablaufen. Gemäß einer bevorzugten Weiterbildung der Erfindung ist dabei vorgesehen, dass der automatische Aufbau der Funkkommunikation zwischen dem Funktransponder und der Funkleseeinrichtung eine automatische Erkennung des Vorhandenseins der Systemkomponente mit dem Funktransponder umfasst. Zusätzlich oder alternativ dazu ist gemäß einer bevorzugten Weiterbildung der Erfindung vorgesehen, dass der automatische Aufbau der Funkkommunikation zwischen dem Funktransponder und der Funkleseeinrichtung eine automatische Identifizierung der Art der Systemkomponente mit dem Funktransponder umfasst.

Dabei ist vorzugsweise vorgesehen, dass die automatische Identifizierung der Systemkomponente mit dem Funktransponder eine Überprüfung der Eignung der Systemkomponente mit dem Funktransponder für die Systemkomponente mit der Funkleseeinrichtung umfasst. Dies ist insbesondere insofern vorteilhaft, als dass auf diese Weise eine weitere Datenübertragung zwischen dem Zusatzmodul und dem elektrischen Küchengerät nur dann zugelassen werden kann, wenn sich herausgestellt hat, dass die beiden Komponenten tatsächlich für einander geeignet sind, so dass insbesondere die Übertragung von Schaddaten zwischen den beiden Systemkomponenten vermieden werden kann.

Grundsätzlich kann das Zusatzmodul unterschiedliche Daten tragen, die auf das elektrische Küchengerät übertragbar sind bzw. von diesem für verschiedene Zusatzfunktionen verwendet werden können. Gemäß einer bevorzugten Weiterbildung der Erfindung ist in diesem Zusammenhang das elektrische Küchengerät zur Herstellung von Speisen nach vorbestimmten Rezeptdaten vorgesehen, wobei auf dem Zusatzmodul derartige Rezeptdaten abgespeichert sind. Gemäß dieser bevorzugten Weiterbildung der Erfindung kann also das Zusatzmodul dazu verwendet werden, zusätzliche Rezeptdaten auf das elektrische Küchengerät zu übertragen bzw. diesem zur Verfügung zu stellen. In diesem Zusammenhang ist gemäß einer bevorzugten Weiterbildung der Erfindung ferner vorgesehen, dass mit dem Zusatzmodul eine Verbindung zu einem externen Speicher herstellbar ist, auf dem derartige Rezeptdaten abgespeichert sind.

Die Verbindung zu dem externen Speicher ist dabei vorzugsweise über das Internet herstellbar. Auf diese Weise ist die Übertragung von Rezeptdaten von dem Zusatzmodul auf das elektrische Küchengerät nicht auf derartige Daten beschränkt, die bereits auf dem Zusatzmodul abgespeichert sind. Vielmehr kann eine Datenübertragung von aktuellen Daten aus dem externen Speicher erfolgen, so dass eine Aktualisierung der Rezeptdaten auf dem elektrischen Küchengerät praktisch in Echtzeit möglich ist.

Gemäß einer bevorzugten Weiterbildung der Erfindung ist vorgesehen, dass die Rezeptdaten über die mittels der durch den Funktransponder und die Funkleseeinrichtung bereitstellbare Funkkommunikation zwischen dem Zusatzmodul und dem elektrischen Küchengerät übertragbar sind. Insbesondere kann auf diese Weise ein System bereitgestellt werden, bei dem es automatisch, nämlich nach entsprechender Annäherung des Zusatzmoduls an das elektrische Küchengerät, zu einer Kopplung der beiden Systemkomponenten kommt, wenn die grundsätzliche Eignung des Zusatzmoduls für das elektrische Küchengerät erfasst worden ist. Automatisch wird dann der Speicherinhalt des Zusatzmoduls, wie die schon angesprochenen Rezeptdaten, dem elektrischen Küchengerät zur Verfügung gestellt, so dass mittels der Funkkommunikation, also berührungslos, Rezeptdaten von dem Zusatzmodul auf das elektrische Küchengerät übertragen werden können.

Andererseits ist es gemäß einer bevorzugten Weiterbildung der Erfindung auch möglich, dass das elektrische Küchengerät eine Zusatzmodul-Anschlusseinrichtung zum Anschließen des Zusatzmoduls aufweist, das Zusatzmodul eine Küchengerät-Anschlusseinrichtung zum Anschließen an das Küchengerät aufweist und der Funktransponder sowie die Funkleseeinrichtung zur Herstellung der Funkkommunikation zwischen dem Zusatzmodul und dem elektrischen Küchengerät zusätzlich zu der Zusatzmodul-Anschlusseinrichtung und der Küchengerät-Anschlusseinrichtung vorgesehen sind. Das bedeutet, dass bei diesem System zwei voneinander getrennte Kommunikationswege zwischen dem Zusatzmodul und dem elektrischen Küchengerät bereitgestellt werden, nämlich einerseits über die Funkkommunikationsverbindung und andererseits über die Schnittstelle Zusatzmodul-Anschlusseinrichtung/Küchengerät-Anschlusseinrichtung.

Dies ermöglicht insbesondere eine bevorzugte Weiterbildung der Erfindung dahin, dass über die verschiedenen Kommunikationswege unterschiedliche Arten der Kommunikation erfolgen. Insbesondere ist gemäß einer bevorzugten Weiterbildung der Erfindung vorgesehen, dass die Funkkommunikation zur Erkennung und Identifizierung des Zusatzmoduls von dem elektrischen Küchengerät und die Schnittstelle Zusatzmodul-Anschlusseinrichtung/Küchengerät-Anschlusseirichtung zur Übertragung der Rezeptdaten von dem Zusatzmodul auf das elektrische Küchengerät verwendet wird. Dies kann insofern vorteilhaft sein, als dass bei der Annäherung des Zusatzmoduls an das elektrische Küchengerät in einem ersten Schritt die Art des Zusatzmoduls erkannt und überprüft wird, ob das Zusatzmodul überhaupt für das elektrische Küchengerät geeignet ist. Dies erfolgt über die Funkkommunikation zwischen den beiden Systemkomponenten. Erst wenn auf diesem Weg eine Freischaltung des Zusatzmoduls erfolgt ist, also das Zusatzmodul zur Datenkommunikation mit dem elektrischen Küchengerät zugelassen worden ist, können auch tatsächlich Rezeptdaten zwischen dem Zusatzmodul und dem elektrischen Küchengerät übertragen werden. Die Übertragung der Rezeptdaten erfolgt dann jedoch nicht mehr über die Funkkommunikation zwischen dem Funktransponder und der Funkleseeinrichtung, sondern über die Schnittstelle Zusatzmodul-Anschlusseinrichtung/Küchengerät-Anschlusseinrichtung.

Bei diesem Ausführungsbeispiel aber auch grundsätzlich sind die Zusatzmodul-Anschlusseinrichtung und die Küchengerät-Anschlusseinrichtung vorzugsweise als Stecker/Buchse-System ausgestaltet. Vorzugsweise ist dabei vorgesehen, dass das Zusatzmodul über seine Küchengerät-Anschlusseinrichtung, die als Stecker ausgebildet ist, in die Zusatzmodul-Anschlusseinrichtung, die als Buchse ausgebildet ist, in das elektrische Küchengerät einsteckbar ist.

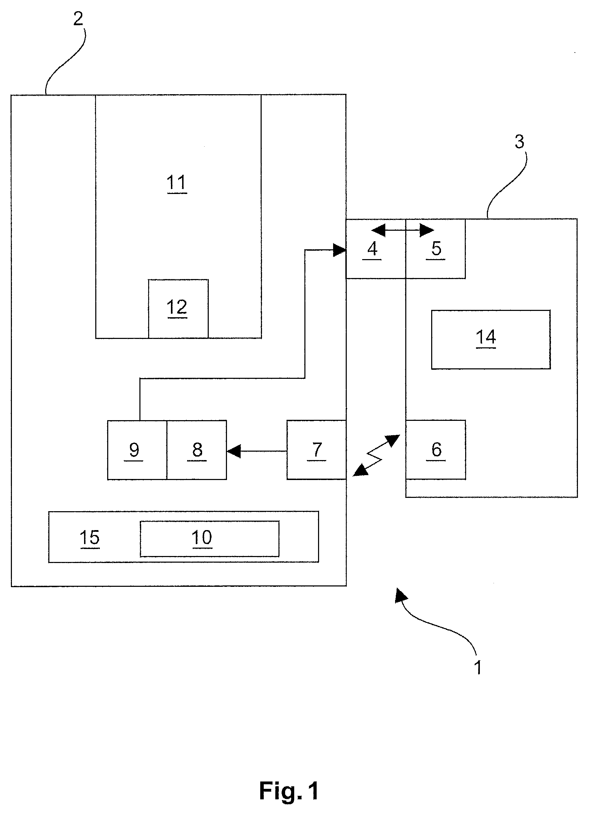

Im Folgenden wird die Erfindung unter Bezugnahme auf die Zeichnung anhand eines bevorzugten Ausführungsbeispiels weiter erläutert.

In der Zeichnung zeigt die einzige Figur schematisch ein System aus einem elektrischen Küchengerät und einem Zusatzmodul gemäß einem bevorzugten Ausführungsbeispiel der Erfindung.

Wie aus der Figur ersichtlich, ist gemäß dem vorliegend beschriebenen bevorzugten Ausführungsbeispiel der Erfindung ein System 1 aus einem elektrischen Küchengerät 2 und einem daran anschließbaren Zusatzmodul 3 vorgesehen. Die Figur zeigt den Zustand, in dem das Zusatzmodul 3 an das elektrische Küchengerät 2 angeschlossen ist. Dieser Anschluss des Zusatzmoduls 3 an das elektrische Küchengerät 2 dient dem Datenaustausch zwischen dem Zusatzmodul 3 und dem Küchengerät 2, insbesondere nämlich zur Übertragung von in einem Speicher 14 des Zusatzmoduls 3 abgelegten Rezeptdaten, die dann auf dem elektrischen Küchengerät 2 verwendet bzw. abgearbeitet werden können.

Zur Abarbeitung derartiger Rezeptdaten, also zur eigentlichen Verarbeitung von Nahrungsmitteln in dem elektrischen Küchengerät 2, weist dieses einen Verarbeitungsraum 11 mit einer Verarbeitungseinrichtung 12 auf. Diese Verarbeitungseinrichtung 12 ist vorliegend ein Schneid-/Rückwerk, mit dem Nahrungsmittel zerkleinert, verrührt und geknetet werden können.

Die zentrale Steuerung der Abläufe in dem elektrischen Küchengerät 2 werden von einer zentralen Steuereinheit 15 übernommen, die mit einem Speicher 10 versehen ist. Rezeptdaten, die auf dem elektrischen Küchengerät 2 abgearbeitet werden, können in diesem Speicher 10 hinterlegt sein bzw. auf diesen übertragen werden, z.B. von dem Zusatzmodul 3 aus.

Um nun einen derartigen Datenaustausch von Rezeptdaten zwischen dem Zusatzmodul 3 und dem elektrischen Küchengerät 2 zu ermöglichen, ist das elektrische Küchengerät 2 mit einer Zusatzmodul-Anschlusseinrichtung 4 versehen und das Zusatzmodul 3 weist eine Küchengerät-Anschlusseinrichtung 5 auf. Aus der Figur ist der Anschluss des Zusatzmoduls 3 an das elektrische Küchengerät 2 über die Schnittstelle Zusatzmodul-Anschlusseinrichtung/Küchengerät-Anschlusseinrichtung nur schematisch dargestellt. Konkret erfolgt der Anschluss über diese Schnittstelle gemäß dem vorliegend beschriebenen bevorzugten Ausführungsbeispiel der Erfindung mittels einer Steckverbindung. Die Küchengerät-Anschlusseinrichtung 5 ist also als Stecker ausgebildet, der in die als Buchse ausgebildete Zusatzmodul-Anschlusseinrichtung 4 eingesteckt werden kann.

Das eigentliche Einstecken der Küchengerät-Anschlusseinrichtung 5 in die Zusatzmodul-Anschlusseinrichtung 4 erlaubt jedoch noch keinen Datenaustausch zwischen dem Zusatzmodul 3 und dem elektrischen Küchengerät 2. Dieser Datenaustausch muss erst freigeschaltet werden, wozu folgender Ablauf vorgesehen ist:
Das Zusatzmodul 3 ist mit einem Funktransponder 6 versehen, und das elektrische Küchengerät 2 weist eine Funkleseeinrichtung 7 auf. Der Funktransponder 6 und die Funkleseeinrichtung 7 arbeiten nach der RFID-Technologie. Der Funktransponder 6 und die Funkleseeinrichtung 7 sind derart ausgestaltet, dass eine Funkkommunikation zwischen dem Funktransponder 6 und der Funkleseeinrichtung 7 automatisch dann aufgebaut wird, wenn der Abstand zwischen dem Funktransponder 6 im Zusatzmodul 3 und der Funkleseeinrichtung 7 im elektrischen Küchengerät einen vorbestimmten Abstand von 50 cm unterschritten hat. Das bedeutet, dass das Zusatzmodul 3 also nur in die Nähe des elektrischen Küchengeräts 2 gebracht werden muss, um die Funkkommunikation zwischen dem Funktransponder 6 und der Funkleseeinrichtung 7 zu etablieren.

Bei diesem automatischem Aufbau der Funkkommunikation zwischen dem Funktransponder 6 des Zusatzmoduls 3 und der Funkleseeinrichtung 7 des elektrischen Küchengeräts 2 erfolgt zuerst eine automatische Erkennung, dass das Zusatzmodul 3 mit seinem Funktransponder 6 überhaupt vorhanden ist, sich also in Reichweite der Funkleseeinrichtung 7 des elektrischen Küchengeräts 2 befindet. Ist dieses grundsätzliche Vorhandensein erfasst worden, so erfolgt in einem zweiten Schritt beim automatischen Aufbau der Funkkommunikation eine automatische Identifizierung der Art des Zusatzmoduls 3. Konkret wird bei der automatischen Identifizierung abgeprüft, ob die Art des Zusatzmoduls 3 überhaupt einen Betrieb desselben am elektrischen Küchengerät 2 zulässt, also ob das Zusatzmodul 3 für das elektrische Küchengerät 2 geeignet ist.

Dazu werden vom Funktransponder 6 abgerufene und von der Funkleseeinrichtung 7 empfangene Daten an eine Auswerteeinrichtung 8 des elektrischen Küchengeräts 2 weitergegeben. In der Auswerteeinrichtung 8 erfolgt eine Auswertung des von der Funkleseeinrichtung 7 empfangenen Signals dahin, ob die empfangenen Daten mit einem in dem elektrischen Küchengerät 2, nämlich im Speicher 10 der zentralen Steuereinheit 15, abgelegten vorbestimmten Signal übereinstimmt. Ist dies der Fall, erfolgt automatisch eine Freischaltung des Datenaustausches zwischen dem elektrischen Küchengerät 2 und dem Zusatzmodul 3 über die Schnittstelle Küchengerät-Anschlusseinrichtung/Zusatzmodul-Anschlusseinrichtung mittels einer Freischalteinrichtung 9.

Damit wird sichergestellt, dass vom Zusatzmodul 3 über die Schnittstelle KüchengerätAnschlusseinrichtung/Zusatzmodul-Anschlusseinrichtung erst dann Daten an das elektrische Küchengerät 2 übertragen werden können, wenn festgestellt worden ist, dass das Zusatzmodul 3 auch für das elektrische Küchengerät 2 vorgesehen ist. Somit wird vermieden, dass dem elektrischen Küchengerät 2 derartige Rezeptdaten zugeführt werden, die aufgrund ihrer mangelnden Eignung für das elektrische Küchengerät 2 dort Schaden anrichten könnten.

**Bezugszeichenliste**

| | |
|---|---|
| System | 1 |
| Elektrisches Küchengerät | 2 |
| Zusatzmodul | 3 |
| Zusatzmodul-Anschlusseinrichtung | 4 |
| Küchengerät-Anschlusseinrichtung | 5 |
| Funktransponder | 6 |
| Funkleseeinrichtung | 7 |
| Auswerteeinrichtung | 8 |
| Freischalteinrichtung | 9 |
| Speicher des elektrischen Küchengeräts | 10 |
| Verarbeitungsraum | 11 |
| Verarbeitungseinrichtung | 12 |
| Speicher des Zusatzmoduls | 14 |
| Zentrale Steuereinheit | 15 |

## Patentansprüche

1. System mit einem elektrischen Küchengerät (2) und einem an das elektrische Küchengerät (2) zum Datenaustausch anschließbaren Zusatzmodul (3), **dadurch gekennzeichnet, dass**
das Zusatzmodul (3) oder/und das elektrische Küchengerät (2) einen Funktransponder (6) aufweist und
das elektrische Küchengerät (2) bzw. das Zusatzmodul (3) eine Funkleseeinrichtung (7) für eine Funkkommunikation mit dem Funktransponder (6) aufweist.

2. System nach Anspruch 1, **dadurch gekennzeichnet, dass** der Funktransponder (6) und die Funkleseeinrichtung (7) zum Betrieb auf Basis der RFID-Technologie oder auf Basis der NFC-Technologie ausgestaltet und eingerichtet sind.

3. System nach Anspruch 1 oder 2, **dadurch gekennzeichnet, dass** der Funktransponder (6) und die Funkleseeinrichtung (7) derart ausgebildet und eingerichtet sind, dass die Funkkommunikation zwischen dem Funktransponder (6) und der Funkleseeinrichtung (7) automatisch aufgebaut wird, wenn der Abstand zwischen dem Funktransponder (6) und der Funkleseeinrichtung (7) einen vorbestimmten Abstand unterschritten hat.

4. System nach Anspruch 4, **dadurch gekennzeichnet, dass** der automatische Aufbau der Funkkommunikation zwischen dem Funktransponder (6) und der Funkleseeinrichtung (7) eine automatische Erkennung des Vorhandenseins der Systemkomponente mit dem Funktransponder (6) umfasst.

5. System nach Anspruch 4 oder 5, **dadurch gekennzeichnet, dass** der automatische Aufbau der Funkkommunikation zwischen dem Funktransponder (6) und der Funkleseeinrichtung (7) eine automatische Identifizierung der Art der Systemkomponente mit dem Funktransponder (6) umfasst.

6. System nach Anspruch 5, **dadurch gekennzeichnet, dass** die automatische Identifizierung der Systemkomponente mit dem Funktransponder (6) eine Überprüfung der Eignung der Systemkomponente mit dem Funktransponder (6) für die Systemkomponente mit der Funkleseeinrichtung (7) umfasst.

7. System nach einem der vorhergehenden Ansprüche, **dadurch gekennzeichnet, dass** das elektrische Küchengerät (2) zur Herstellung von Speisen nach vorbestimmten Rezeptdaten vorgesehen ist und auf dem Zusatzmodul (3) derartige Rezeptdaten abgespeichert sind.

8. System nach Anspruch 7, **dadurch gekennzeichnet, dass** die Rezeptdaten über die mittels der durch den Funktransponder (6) und die Funkleseeinrichtung (7) bereitstellbare Funkkommunikation zwischen dem Zusatzmodul (3) und dem elektrischen Küchengerät (2) übertragbar sind.

9. System nach Anspruch 7, **dadurch gekennzeichnet, dass** das elektrische Küchengerät (2) eine Zusatzmodul-Anschlusseinrichtung (4) zum Anschließen des Zusatzmoduls (3) aufweist,
das Zusatzmodul (3) eine Küchengerät-Anschlusseinrichtung (5) zum Anschließen an das Küchengerät (2) aufweist und
der Funktransponder (6) und die Funkleseeinrichtung (7) zur Herstellung der Funkkommunikation zwischen dem Zusatzmodul (3) und dem elektrischen Küchengerät (2) zusätzlich zu der Zusatzmodul-Anschlusseinrichtung (4) und der Küchengerät-Anschlusseinrichtung (5) vorgesehen sind.

10. System nach Anspruch 9, **dadurch gekennzeichnet, dass** die Funkkommunikation zur Erkennung und Identifizierung des Zusatzmoduls (3) von dem elektrischen Küchengerät (2) und die Schnittstelle Zusatzmodul-Anschlusseinrichtung/Küchengerät-Anschlusseinrichtung zur Übertragung der Rezeptdaten von dem Zusatzmodul (3) auf das elektrische Küchengerät (2) vorgesehen ist.
